# FASCICULE DE BREVET EUROPEEN

(11) **EP 1 733 864 B1**
(45) Date de publication et mention de la délivrance du brevet: **18.07.2007**
(21) Numéro de dépôt: 06005804.7
(22) Date de dépôt: 14.09.1999
(51) Int. Cl.: B29C 45/17, B29C 45/00

(54) **Composition pour la fabrication de corps creux par injection-gaz**
Zusammensetzung für die Herstellung hohler Körper durch Gasinjektiontechnik
Moulding material composition for hollow products made by gas-assisted injection moulding

(30) Priorité: 25.09.1998 FR 9812182
(43) Date de publication de la demande: 20.12.2006
(62) Demande divisionnaire de: 99946219.5
(73) Titulaire: Rhodia Engineering Plastics SA, 69190 Saint-Fons (FR)
(72) Inventeur: Lambert, André, Vieux Vaugris 38121 Reventin Vaugris (FR); Pötsch, Dr. Gerhard, 79108 Freiburg (DE); Schwitzer, Klaus, 79276 Reute (DE)
(74) Mandataire: Valentino, Cédric

(56) Documents cités:
- EP-A- 0 844 060
- GB-A- 2 307 664
- PATENT ABSTRACTS OF JAPAN vol. 95, no. 8, 29 septembre 1995 (1995-09-29) & JP 07 138421 A (ASAHI CHEM IND CO LTD), 30 mai 1995 (1995-05-30)
- LEYRER K H: "SPRITZGIESSEN MIT DEM GASINNENDRUCKPROZESS" PLASTVERARBEITER, vol. 41, no. 2, février 1990 (1990-02), pages 39-43, XP000135168
- DATABASE WPI Week 9431 Derwent Publications Ltd., London, GB; AN 94-252213 XP002104508 & JP 06 182821 A (ASAHI KASEI KOGYO KK) 5 juillet 1994 (1994-07-05)
- MICHAELI W ET AL: "HERSTELLUNG MEDIENFÜAHRENDER LEITUNGEN DURCH GIT" KUNSTSTOFFE, vol. 88, no. 1, janvier 1998 (1998-01), pages 34-36, 39, XP000729798

## Description

La présente invention concerne une composition apte pour un procédé de fabrication de corps creux par la mise en oeuvre d'une technique de moulage appelée "moulage par injection gaz".

Elle se rapporte plus particulièrement à un procédé de fabrication de corps creux tels que tubes, tuyaux, conduits par moulage d'une composition thermoplastique.

De nombreux articles ou pièces ont des formes creuses. Ainsi, les réservoirs, les conduits pour carburant, air ou liquide de refroidissement dans les moteurs à explosion ou à combustion interne sont des corps creux qui doivent résister mécaniquement aux agressions extérieures, mais également présenter une face interne la plus lisse possible pour éviter de perturber l'écoulement des fluides. En outre, ces conduits ont des formes complexes pour permettre leur montage dans les moteurs.

Ces conduits sont de plus en plus souvent réalisés à partir d'une composition thermoplastique pour diminuer le poids du moteur et également pour des considérations économiques de coûts de fabrication.

Parmi les techniques de moulage utilisées pour la réalisation de ces pièces, on peut citer l'extrusion par soufflage, le moulage par injection et le moulage par injection gaz.

La première technique d'extrusion soufflage est notamment utilisée pour la fabrication de corps creux présentant un diamètre élevé et une épaisseur de paroi relativement élevée.

La seconde technique d'injection requiert la fabrication de l'article ou pièce en deux parties qui seront soudées par exemple par un procédé de soudage par vibrations. Ce procédé présente de nombreux inconvénients tant d'un point de vue économique que technique. Ainsi, il est nécessaire pour obtenir une bonne soudure d'utiliser des compositions thermoplastiques particulières, des formes et des bords de chaque demi-pièce adaptés.

La troisième technique de moulage par injection gaz connaît un fort développement pour la fabrication de corps creux et notamment de conduits ou tuyaux.

L'invention concerne essentiellement la fabrication de corps creux par mise en oeuvre de cette dernière technique de moulage.

Cette technique est décrite dans de nombreux articles et brevets.

Ainsi, on peut citer à titre d'exemple l'article intitulé "Gas Injection Molding : Current Practices" de S. SHAH publié dans la revue "ANTEC - 91 - pages 1494 à 1506.

L'application de cette technique et des exemples de pièces réalisées à partir de celle-ci sont donnés dans l'article intitulé "Gas injection Molding : Structural application" de S. SHAH et D. HLAVATY publié dans la même revue que ci-dessus aux pages 1479 - 1493.

Une description des procédés d'injection gaz connus sous la marque CINPRES est également donnée dans l'article "IM Alternatives Produce Performance Advantages" de John Theverge publié dans la revue "Plastics Engineering" de février 1991 (pages 27 - 31).

On peut également citer l'article "Neue Möglichkeiten beim Spritzgiessen durch das Gasinnendruckverfahren" de B. KLOTZ et E. BÜRKLE publié dans Kunstoffe 79 (1989) n° 11 - pages 1102 - 1107.

Brièvement, cette technique consiste, dans un premier mode de réalisation, à injecter dans un moule de forme correspondante à celle de la pièce à mouler, une certaine quantité de matière insuffisante pour remplir entièrement le moule. Puis, à introduire dans la masse ainsi injectée, en un ou plusieurs points, une aiguille pour permettre l'alimentation d'un gaz sous pression. Le gaz va générer une cavité dans la masse fondue injectée en forçant le polymère à épouser les parois du moule. Après refroidissement, la pièce est démoulée. Dans un second mode de réalisation, le moule est rempli totalement avec la composition thermoplastique, du gaz sous pression est injecté dans la dite masse pour refouler une partie de la matière hors du moule et ainsi former une cavité tout en maintenant une partie de la matière contre les parois du moule jusqu'à prise en masse ou solidification de celle-ci.

Ces techniques sont notamment utilisées pour réaliser des pièces à paroi épaisse ou pour diminuer la quantité de matière des pièces massiques.

Depuis quelques années, cette technique, plus particulièrement le mode de réalisation à refoulement de matière, est également utilisée pour la fabrication de corps creux à paroi de faible épaisseur tels que des conduits, tuyaux etc. des compositions existent pour la mise en oeuvre de ces techniques, comme par exemple celle citée dans le document JP 07138421.

Toutefois, pour réaliser ces articles dans lesquels vont circuler des fluides, il est nécessaire d'obtenir une surface interne aussi régulière que possible, une épaisseur de paroi également régulière. En outre, pour des raisons de productivité il est également obligatoire que la durée de cycle de moulage soit la plus rapide possible.

Ces différentes obligations sont actuellement difficiles à obtenir simultanément ce qui limite l'utilisation de cette technique pour la fabrication de certains articles, notamment des conduits pour essence, liquide de refroidissement des moteurs à explosion ou à combustion interne.

Un des buts de la présente invention est de remédier à ces inconvénients en proposant un procédé de fabrication d'articles par la technique d'injection gaz en utilisant une composition de moulage présentant des caractéristiques particulières permettant d'obtenir des articles présentant des caractéristiques d'état de surface, homogénéité de forme et temps de cycle améliorées et satisfaisantes pour une fabrication industrielle.

A cet effet, l'invention propose une composition comprenant comme matrice principale un polymère thermoplastique et comme charge de renfort un composé fibreux de facteur de forme supérieur à 20 de préférence UD supérieur ou égal à 30,caractérisé en ce que la composition comprend également une charge particulaire de facteur de forme UD inférieur à 20 et un composé favorisant la nucléation du polymère.

Une composition comprenant des charges de renfort de tailles différentes, c'est-à-dire présentant un spectre de répartition des dimensions des charges étalée entre deux valeurs ou bimodale permet de manière surprenante d'obtenir une répartition homogène de la matière dans tout le moule et donc d'obtenir des épaisseurs de parois du corps creux homogènes et régulières. De plus, la combinaison de ces charges et d'un agent nucléant permet d'obtenir un état de surface interne convenable pour obtenir un écoulement des fluides correct, notamment en limitant la formation de bulles de gaz dissous dans la matière et l'affleurement des charges fibreuses en surface.

Selon une caractéristique préférentielle de l'invention, la charge fibreuse est de la fibre de verre, fibre de céramique, fibre de carbone, fibre en polymère thermostable. De préférence, cette charge fibreuse est constituée par de la fibre de verre. Les fibres de verre généralement utilisées ont une longueur comprise entre 1 mm et 5 mm et un diamètre compris entre 5µm et 20 µm. Au cours du mélange et malaxage avec le polymère fondu, ces fibres sont cassées et présentent une longueur moyenne dans la composition comprise entre 300 et 500 µm.

Avantageusement, cette fibre peut comprendre un ensimage qui permet d'améliorer certaines propriétés de la composition. Plus particulièrement, elle peut comprendre un ensimage résistant à la glycolyse, notamment quand l'article ou la pièce à fabriquer est destinée à être en contact avec un liquide contenant de l'alcool tel que les fluides de refroidissement ou les carburants

Selon une autre caractéristique de l'invention, la charge particulaire est avantageusement choisie dans le groupe comprenant les charges minérales, les billes de verre, les écailles de verre, les fibres de verre broyées.

Dans un mode de réalisation préféré de l'invention, la charge particulaire est avantageusement des billes de verre de diamètre compris entre 10 µm et 60 µm ou des fibres de verre broyées de longueur inférieure à 250µm et diamètre inférieur à 20 µm.

La concentration totale en poids des charges fibreuse et particulaire dans la composition peut varier dans de grandes limites, et est comprise, par exemple, entre 10 % et 60 % du poids total de la composition.le rapport pondéral entre la charge particulaire et la charge fibreuse est avantageusement compris entre 0,2 et 10, préférentiellement entre 0,5 et 4.

Selon une autre caractéristique de l'invention, la composition comprend un composé favorisant la nucléation de la composition pour ainsi obtenir notamment une durée de cycle de moulage courte. Ces composés appelés également agents nucléants sont généralement des solides finement divisés qui agissent comme un noyau de nucléation. A titre d'exemple, de tels agents nucléants pour les polyamides sont décrits dans les brevets US 2 855 377, 3 549 651, 4 200 657, 3 867 339, 4 397 979, 4 749 736.

On peut citer comme exemple d'agents nucléants convenables pour l'invention dans le cas où le polymère thermoplastique est un polyamide, les phénylphosphonates de zinc, sodium ou calcium, les métasilicates, aluminates, métaphosphates de lithium, de zirconium, les fluorures de magnésium, de lithium, calcium.

D'autres composés comme le talc, le graphite, l'oxyde d'antimoine peuvent être utilisés comme agent de nucléation.

Cette liste n'est donnée qu'à titre indicatif. L'utilisation d'agents nucléants non énumérés ci-dessus est incluse dans le cadre de l'invention.

La concentration en agent nucléant dans la composition est avantageusement inférieure à 1 % en poids par rapport à la composition totale, de préférence comprise entre 50 ppm et 600 ppm.

L'addition de l'agent nucléant peut être réalisée à différents moments du procédé de fabrication. Ainsi, il peut être ajouté dans le polymère au cours de la polymérisation ou mélanger à celui-ci dans l'extrudeuse. Il est également possible de mélanger ce composé avec des granulés de polymère pour effectuer un revêtement des granulés par l'agent nucléant.

Selon une autre caractéristique de l'invention, le polymère thermoplastique est un polymère ou un mélange de polymère choisi dans le groupe comprenant les polyesters, polypropylènes, polyamides.

Selon une caractéristique préférentielle de l'invention, la matrice thermoplastique comprend au moins un polyamide choisis dans le groupe comprenant des homopolyamides ou copolyamides majoritairement aliphatique. Ainsi les polyamides les plus utilisés sont le poly(hexaméthylène adipamide) et le poly (ε-caproamide) leurs copolymères ou mélanges.

Toutefois, d'autres polyamides obtenus à partir soit d'autres lactames, soit d'autres diacides et/ou diamines sont également convenables pour l'invention. On peut ainsi citer les polyamides 4,6 ; polyamide 6,10 ; polyamide 6,12 ; polyamide 12, les copolyamides comprenant des unités dérivés de dimère d'acides gras comme le polyamide 6/36 ou les copolyamides 6-6/36.

Il est également possible d'utiliser des polyamides semi-aromatiques cristallins obtenus à partir de diamine aliphatique comme l'hexaméthylène diamine et/ou la méthyl-5 pentaméthylène diamine et de diacides aromatiques comme les acides téréphtalique et isophtalique en mélange ou non avec un acide aliphatique tel que l'acide adipique, par exemple.

La composition peut également comprendre d'autres additifs tels que des stabilisants chaleur et/ou lumière des pigments ou colorants, des ignifugeants, des modifiants de ténacité, des additifs facilitant le mélange des composants ou le moulage de la composition, et plus généralement tout additif utilisé habituellement dans le domaine des compositions pour moulage.

Les compositions de l'invention sont généralement préparées par mélange dans une extrudeuse bi-vis ou mono-vis du polyamide et des différentes charges. La composition est extrudée sous forme de joncs qui sont coupés pour former des granulés.

Ces granulés sont alors alimentés dans les dispositifs ou installations de moulage de pièce et après fusion injectés dans les moules.

Le procédé de l'invention permet de fabriquer par la technique de l'injection gaz des pièces ou articles creux qui présente une épaisseur de paroi régulière et avantageusement d'épaisseur inférieure à 10 mm

Ces pièces ou articles sont notamment des corps creux allongés tels que des conduits, tuyaux, tubulures ou analogues.

Avec l'utilisation d'une composition telle que décrite ci-dessus, la face interne des corps creux est suffisamment lisse pour permettre un écoulement des fluides dans ces corps creux sans perturbation.

Ainsi, le procédé de l'invention permet de fabriquer des conduits, tubulures pour carburant, fluide de refroidissement ou air pour les moteurs à combustion interne ou à explosion.

D'autres avantages, détails de l'invention apparaîtront plus clairement au vu des exemples donnés ci-dessous uniquement à titre indicatif.

Des compositions pour moulage conforme à l'invention sont préparées par mélange dans une extrudeuse bi-vis de type W et P ZSK 40 avec un débit de 50 kg/H et une vitesse de rotation de vis égale à 270 tr/min, à une température de 270°C, des différents composants la constituant.

La composition ainsi préparée est extrudée sous forme de joncs qui sont ensuite coupés en granulés de longueur environ 1,5 mm. La description des compositions préparées est indiquée dans le tableau 1 ci-dessous.

| | | 1 | 2 | 3 | 4 | A | 15 |
|---|---|---|---|---|---|---|---|
| Polyamide 66 Iv = 140 | | 69 | 67 | 69 | 69 | 69 | 15 |
| Fibres de verre P 355 | | 15 | 13 | 13 | 15 | 10 | 30 |
| Billes de verre | | 15 | 19 | 17 | | 20 | - |
| Fibres de verre broyées | | - | - | - | 15 | - | - |
| Nucléant | PPCa | 0,1 | 0,1 | | 0,1 | 0,1 | 0,1 |
| | Talc | - | - | 0,2 | - | | |
| Pigment | | 0,2 | 0,2 | 0,2 | 0,2 | 0,2 | 0,2 |
| Stabilisation chaleur | | 0,28 | 0,28 | 0,28 | 0,28 | 0,28 | 0,28 |
| Cire | | 0,27 | 0,27 | 0,27 | 0,27 | 0,27 | 0,27 |

Les exemples A et B sont des exemples comparatifs.

Les fibres de verre utilisées ont une longueur de 3 mm et un diamètre de 10 µm. Elles comprennent un ensimage pour améliorer la résistance à la glycolyse de la composition. Après mélange avec le polyamide, la longueur moyenne des fibres de verre est d'environ 300 µm.

Les billes de verre ont un diamètre de 40 µm.

Les fibres de verre broyées ont une longueur moyenne de 210 µm et un diamètre de 14 µm.

PPCa est un agent nuléant phenylphosphonate de calcium.

Les autres composants pigment, stabilisant chaleur et cire sont ceux habituellement utilisés dans le domaine des compositions polyamide renforcées par des fibres de verre.

Des essais de moulage d'un tube cylindrique de diamètre 20 mm, longueur 400 mm et épaisseur de paroi égale à 3,5 mm ont été réalisés à partir de chaque composition par la technique injection gaz en utilisant un système de moulage commercialisé sous le nom PRODAIR.

L'aptitude des compositions de l'invention à la technique de moulage par injection gaz est déterminée d'une part par la durée de cycle de moulage, c'est-à-dire le temps nécessaire de maintien sous pression du gaz injecté dans la masse de polymère pour obtenir un bon remplissage du moule et une cristallisation du matériau et d'autre part l'état de la surface interne de la pièce. Cet état est qualifié par une note qualitative de 1 à 6, la note 1 correspondant à une surface lisse, la note 6 étant affectée à une surface présentant des défauts de surface (bulles, affleurement des fibres de verre) perturbant l'écoulement d'un fluide dans le tube.

Les résultats sont rassemblés dans le tableau ci-dessous.

| Exemples | Durée de maintien en pression (en secondes) | Etat de surface |
|---|---|---|
| 1 | 45 | 3 |
| 2 | 41 | 3 |
| 3 | 42 | 3 |
| 4 | 34 | 4 |
| A | 66 | 1 |
| B | 50 | 6 |

## Revendications

1. Composition comprenant un polymère thermoplastique et un composé fibreux de facteur de forme UD supérieur à 20 comme charge de renfort, **caractérisé en ce** la composition comprend également une charge particulaire dont le facteur de forme UD est inférieur à 20, et un composé favorisant la nucléase de la composition.

2. Composition selon la revendication 1, **caractérisée en ce que** le composé fibreux est choisi dans le groupe comprenant la fibre de verre, fibre de céramique, fibre de carbone, fibre en polymère thermostable.

3. Composition selon la revendication 2, **caractérisée en ce que** le composé fibreux est de la fibre de verre de longueur comprise entre 1 et 5 mm, avant mélange avec le polymère thermoplastique.

4. Composition selon la revendication 1 ou 3, **caractérisée en ce que** la charge particulaire est choisie dans le groupe comprenant les charges minérales, les biles de verre, les fibres de verre broyées, les écailles de verre ou un mélange de celles-ci.

5. Composition selon la revendication 4, **caractérisée en ce que** la charge particulaire est de la fibre de verre broyée de longueur moyenne inférieure à 250 µm.

6. Composition selon la revendication 4, **caractérisée en ce que** la charge particulaire est constituée par des billes de verre.

7. Composition selon l'une des revendications précédentes, **caractérisée en ce que** la composition thermoplastique comprend de 10 % à 60 % en poids de charges fibreuses et particulaires par rapport à la composition totale.

8. Composition selon l'une des revendications précédentes, **caractérisé en ce que** le rapport pondéral charge particulaire/charge fibreuse est compris entre 0,2 et 10.

9. Composition selon l'une des revendications précédentes **caractérisé en ce que** le composé nucléant est présent dans une concentration inférieure à 1 % en poids par rapport à la composition totale.

10. Composition selon l'une des revendications précédentes, **caractérisée en ce que** le polymère thermoplastique est choisi dans le groupe comprenant le polypropylène, les polyesters, les polyamides.

11. Composition selon l'une des revendications précédentes, **caractérisée en ce que** la matrice thermoplastique comprend au moins un polyamide.

12. Composition selon la revendication 11, **caractérisée en ce que** le polyamide est choisi dans le groupe comprenant les homopolyamides et copolyamides aliphatiques, les polyamides semi aromatiques semi-cristallins.

13. Composition selon la revendication 12, **caractérisée en ce que** le polyamide est un poly (hexaméthylène adipamide), un poly (ε-caproamide), leurs copolymères ou mélanges.

14. Composition selon l'une des revendications précédentes, **caractérisée en ce que** le composé nucléant est choisi dans le groupe comprenant les phénylphosphonates de zinc, sodium ou calcium, les métasilicates, aluminates, métaphosphates de lithium, de zirconium, les fluorures de magnésium, de lithium, calcium. D'autres composés comme le talc, le graphite, l'oxyde d'antimoine peuvent être utilisés comme agent de nucléation.

15. Composition selon l'une des revendications précédentes, **caractérisée en ce que** la composition thermoplastique comprend des additifs choisis dans le groupe comprenant les pigments, les colorants, les stabilisateurs chaleurs et/ou lumière les composés modifiant la ténacité.

## Claims

1. Composition comprising a thermoplastic polymer and a fibrous compound with an L/D aspect ratio greater than 20 as a reinforcing filler, **characterized in that** the composition also comprises a particulate filler of which the L/D aspect ratio is less than 20, and a compound promoting the nucleation of the composition.

2. Composition according to Claim 1, **characterized in that** the fibrous compound is chosen from the group comprising glass fibre, ceramic fibre, carbon fibre and thermostable polymer fibre.

3. Composition according to Claim 2, **characterized in that** the fibrous compound is glass fibre having a length between 1 and 5 mm, before being blended with the thermoplastic polymer.

4. Composition according to Claim 1 or 3, **characterized in that** the particulate filler is chosen from the group comprising mineral fillers, glass beads, ground glass fibres, glass flakes or a mixture thereof.

5. Composition according to Claim 4, **characterized in that** the particulate filler is ground glass fibre having an average length of less than 250 µm.

6. Composition according to Claim 4, **characterized in that** the particulate filler is composed of glass beads.

7. Composition according to one of the preceding claims, **characterized in that** the thermoplastic composition comprises from 10% to 60% by weight of fibrous and particulate fillers relative to the total composition.

8. Composition according to one of the preceding claims, **characterized in that** the particulate filler/fibrous filler weight ratio is between 0.2 and 10.

9. Composition according to one of the preceding claims, **characterized in that** the nucleating compound is present in a concentration of less than 1% by weight relative to the total composition.

10. Composition according to one of the preceding claims, **characterized in that** the thermoplastic polymer is chosen from the group comprising polypropylene, polyesters and polyamides.

11. Composition according to one of the preceding claims, **characterized in that** the thermoplastic matrix comprises at least one polyamide.

12. Composition according to Claim 11, **characterized in that** the polyamide is chosen from the group comprising aliphatic homopolyamides and copolyamides, and semicrystalline semi-aromatic polyamides.

13. Composition according to Claim 12, **characterized in that** the polyamide is a poly(hexamethylene adipamide), a poly(ε-caproamide), or copolymers or blends thereof.

14. Composition according to one of the preceding claims, **characterized in that** the nucleating compound is chosen from the group comprising zinc, sodium or calcium phenylphosphonates, lithium and zirconium metasilicates, aluminates, metaphosphates, magnesium, lithium and calcium fluorides; other compounds such as talc, graphite and antimony oxide may be used as nucleating agent.

15. Composition according to one of the preceding claims, **characterized in that** the thermoplastic composition comprises additives chosen from the group comprising pigments, dyes, heat and/or light stabilizers and toughness modifiers.

## Patentansprüche

1. Zusammensetzung, die ein thermoplastisches Polymer und eine faserige Verbindung eines Formfaktors L/D von größer als 20 als Verstärkungsfüllstoff einschließt, **dadurch gekennzeichnet, dass** die Zusammensetzung auch einen teilchenförmigen Füllstoff, dessen Formfaktor L/D unter 20 liegt, und eine Verbindung, die die Nukleierung der Zusammensetzung begünstigt, einschließt.

2. Zusammensetzung nach Anspruch 1, **dadurch gekennzeichnet, dass** die faserige Verbindung aus der Gruppe ausgewählt ist, die Glasfaser, Keramikfaser, Kohlefaser und wärmestabile Polymerfaser einschließt.

3. Zusammensetzung nach Anspruch 2, **dadurch gekennzeichnet, dass** die faserige Verbindung Glasfaser einer Länge von 1 bis 5 mm, vor dem Mischen mit dem thermoplastischen Polymer, ist.

4. Zusammensetzung nach Anspruch 1 oder 3, **dadurch gekennzeichnet, dass** der teilchenförmige Füllstoff aus der Gruppe ausgewählt ist, die mineralische Füllstoffe, Glaskügelchen, gemahlene Glasfasern, Glassplitter oder ein Gemisch von diesen einschließt.

5. Zusammensetzung nach Anspruch 4, **dadurch gekennzeichnet, dass** der teilchenförmige Füllstoff gemahlene Glasfaser einer durchschnittlichen Länge unter 250 µm ist.

6. Zusammensetzung nach Anspruch 4, **dadurch gekennzeichnet, dass** der teilchenförmige Füllstoff aus Glaskügelchen besteht.

7. Zusammensetzung nach einem der vorhergehenden Ansprüche, **dadurch gekennzeichnet, dass** die thermoplastische Zusammensetzung 10 bis 60 Gew.-% von faserigen und teilchenförmigen Füllstoffen bezüglich der Gesamtzusammensetzung umfasst.

8. Zusammensetzung nach einem der vorhergehenden Ansprüche, **dadurch gekennzeichnet, dass** das Gewichtsverhältnis von teilchenförmigem Füllstoff/faserigem Füllstoff 0,2 bis 10 beträgt.

9. Zusammensetzung nach einem der vorhergehenden Ansprüche, **dadurch gekennzeichnet, dass** die nukleierende Verbindung in einer Konzentration unter 1 Gew.-% bezüglich der Gesamtzusammensetzung vorhanden ist.

10. Zusammensetzung nach einem der vorhergehenden Ansprüche, **dadurch gekennzeichnet, dass** das thermoplastische Polymer aus der Gruppe bestehend aus Polypropylen, Polyestern und Polyamiden ausgewählt ist.

11. Zusammensetzung nach einem der vorhergehenden Ansprüche, **dadurch gekennzeichnet, dass** die thermoplastische Matrix mindestens ein Polyamid einschließt.

12. Zusammensetzung nach Anspruch 11, **dadurch gekennzeichnet, dass** das Polyamid aus der Gruppe ausgewählt ist, die Homopolyamide und aliphatische Copolyamide und halbaromatische, halbkristalline Polyamide einschließt.

13. Zusammensetzung nach Anspruch 12, **dadurch gekennzeichnet, dass** das Polyamid ein Poly(hexamethylenadipamid), ein Poly(ε-caproamid), ihre Copolymere oder Gemische darstellt.

14. Zusammensetzung nach einem der vorhergehenden Ansprüche, **dadurch gekennzeichnet, dass** die nukleierende Verbindung aus der Gruppe ausgewählt ist, die Zink-, Natrium- oder Calciumphenylphosphonate, Metasilicate, Aluminate, Metaphosphate von Lithium, Zirkonium, Magnesium-, Lithium- und Calciumfluoride einschließt. Weitere Verbindungen, wie Talk, Graphit, Antimonoxid, können als Nukleierungsmittel verwendet werden.

15. Zusammensetzung nach einem der vorhergehenden Ansprüche, **dadurch gekennzeichnet, dass** die thermoplastische Zusammensetzung Additive einschließt, die aus der Gruppe ausgewählt sind, die Pigmente, Farbmittel, Wärme- und/oder Lichtstabilisatoren, Verbindungen, die die Zähigkeit modifizieren, einschließt.
